# EUROPÄISCHE PATENTSCHRIFT

(11) **EP 1 378 447 B1**
(45) Veröffentlichungstag und Bekanntmachung des Hinweises auf die Patenterteilung: **06.09.2006**
(21) Anmeldenummer: 03012554.6
(22) Anmeldetag: 02.06.2003
(51) Int. Cl.: B64D 45/00

(54) **Überwachungsanlage für Luftfahrzeuge**
Aircraft monitoring system
Equipement de surveillance d'un aéronef

(30) Priorität: 02.07.2002 DE 10229666
(43) Veröffentlichungstag der Anmeldung: 07.01.2004
(73) Patentinhaber: Lufthansa Technik AG, 22335 Hamburg (DE)
(72) Erfinder: Muirhead, Andrew, 22846 Norderstedt (DE); Starke, Henry, 25474 Ellerbek (DE)
(74) Vertreter: Glawe, Delfs, Moll

(56) Entgegenhaltungen:
- DE-A- 19 732 806
- US-A- 4 831 438
- US-A- 5 798 458

## Beschreibung

Die Erfindung betrifft eine Anordnung zur Audiokommunikation gemäß dem Oberbegriff des Hauptanspruchs.

Kommunikationsanlagen, zur Audiokommunikation (Sprechfunk) zwischen Luftfahrzeug und Bodenstation sowie zwischen Luftfahrzeugen untereinander sind bekannt. Insbesondere gebräuchlich sind terrestrische Funkverbindungen im VHF-Band.

Aus US-A-5,742,336 ist ein Überwachungssystem für Luftfahrzeuge bekannt. An Bord eines Flugzeuges werden mehrere Videokameras sowie Mikrofone installiert, die entsprechenden Video- und Audiodaten werden über eine Satellitenverbindung an eine Bodenstation übertragen.

DE-A-197 32 806 offenbart eine Überwachungseinrichtung für Flugzeuge, die Bilddaten über eine Funkleitstrahlfunkverbindung an eine Bodenstation übertragen kann.

Der Erfindung liegt die Aufgabe zugrunde, eine einfache und kostengünstige Anordnung der eingangs genannten Art zu schaffen, die zusätzlich eine Überwachung des Flugzeugs von einer Bodenstation aus ermöglicht.

Die Erfindung löst diese Aufgabe dadurch, dass zusätzlich eine Überwachungseinrichtung an Bord des Luftfahrzeugs mit folgenden Merkmalen vorgesehen ist:
a) wenigstens eine im Cockpit angeordnete Audioaufnahmevorrichtung,
b) die Aufnahmevorrichtung ist ferngesteuert von der Bodenstation aus mittels eines über einen VHF-Kommunikationskanals übertragenen Touch-Tone-Signals aktivierbar,
c) einen Speicher für die Daten der Aufnahmevorrichtung,
d) die Aufnahmevorrichtung ist ausschließlich ferngesteuert von der Bodenstation und/oder von Bord des am Boden stehenden Luftfahrzeugs deaktivierbar ist.
e) eine Übertragungsvorrichtung für Daten der Aufnahmevorrichtung an die Bodenstation,
f) die Übertragungsvorrichtung nutzt wenigstens einen VHF-Kommunikationskanal der Anordnung zur Audiokommunikation zwischen Luftfahrzeug und Bodenstation.

Zunächst seien einige im Rahmen der Erfindung verwendete Begriffe erläutert.

Die erfindungsgemäße Anordnung ist zur Audiokommunikation zwischen einer Bodenstation und einem Luftfahrzeug vorgesehen. Die Bezeichnung "Anordnung" macht deutlich, dass die Erfindung sowohl an Bord des Luftfahrzeugs als auch in der Bodenstation angeordnete Vorrichtungen umfasst. Bei der Audiokommunikation kann es sich insbesondere um eine Sprechfunkverbindung (Simplex- oder Duplexverbindung) handeln.

Der Begriff "Bodenstation" bezeichnet jegliche mit dem Luftfahrzeug kommunizierende Basisstation, die in der Regel auch physisch ortsfest am Boden angeordnet ist aber nicht notwendigerweise sein muss. Es kann sich im Rahmen der Erfindung auch um eine mobile Basisstation bspw. an Bord eines Fahrzeugs, Schiffes oder anderen Luftfahrzeugs handeln. Auch dies wird im Rahmen der Erfindung von dem Begriff "Bodenstation" umfasst.

Die erfindungsgemäße Anordnung weist wenigstens einen Kommunikationskanal auf. Dies bedeutet, dass zwischen Luftfahrzeug und Bodenstation wenigstens eine Audioverbindung in eine Übertragungsrichtung herstellbar ist. Erfindungsgemäß ist es bevorzugt, wenn die Bandbreite dieses Kommunikationskanals wenigstens die Übertragung akustisch verständlicher Audiodaten in Echtzeit ermöglicht, wie bspw. bei einer üblichen terrestrischen VHF-Verbindung. In der Regel wird eine erfindungsgemäße Anordnung mehr als einen Kommunikationskanal aufweisen. Bspw. weist eine Vollduplexsprechverbindung bereits einen zweiten Kommunikationskanal auf, so dass eine gleichzeitige Übertragung von Audiodaten in beide Richtungen möglich ist. In der Regel wird eine erfindungsgemäße Anordnung mehrere gleichzeitig nutzbare Kommunikationskanäle (bspw. Sprechfunkkanäle) aufweisen.

Die erfindungsgemäße vorgesehene Überwachungseinrichtung weist wenigstens eine Audioaufnahmevorrichtung auf. Es kann sich dabei insbesondere um Mikrofone handeln. Vorzugsweise sind mehrere Audioaufnahmevorrichtungen vorgesehen, die Vorgänge im Cockpit und/oder der Kabine teilweise oder vollständig akustisch erfassen können. Wenn im Rahmen der Erfindung von der Aufnahmevorrichtung die Rede ist, soll damit immer auch der übliche Fall mehrerer Aufnahmevorrichtungen umfasst sein.

Die Aufnahmevorrichtung ist ferngesteuert von der Bodenstation aus aktivierbar. Aktivieren bedeutet, dass die Vorrichtung mit der Aufnahme von Audiodaten beginnt. Die ferngesteuerte Aktivierung von der Bodenstation aus ist dann von Vorteil, wenn bspw. bei einer Flugzeugentführung, nach einem terroristischen Anschlag oder einem technischen Defekt (Druckverlust oder dergleichen) Cockpit- und/ oder Kabinenpersonal nicht oder nur noch eingeschränkt handlungsfähig sind. Die Bodenstation (Air Traffic Controller) kann dann bei Auffälligkeiten wie bspw. vom Routenplan abweichende Flugdaten (Kursänderungen, plötzliche Höhenänderungen oder dergleichen) das Überwachungssystem ohne Zutun der Luftfahrzeugbesatzung aktivieren, um sich ein Bild von der Situation an Bord zu verschaffen.

Die Aufnahmevorrichtung ist erfindungsgemäß ausschließlich ferngesteuert von der Bodenstation und/oder von Bord des am Boden stehenden Luftfahrzeugs (bspw. an der LRU (line replaceable unit)) deaktivierbar. Damit soll verhindert werden, dass die Luftfahrzeugbesatzung nach Eintritt eines Notfalls aufgrund einer Fehleinschätzung der Situation oder unter äußerem Druck (bspw. bei einer Flugzeugentführung) das System wieder deaktivieren kann. Aus den gleichen Erwägungen sind im Rahmen der Erfindung vorzugsweise die Audiodatenaufnahmevorrichtungen sowie sonstige Bestandteile der erfindungsgemäßen Anordnung versteckt oder unauffällig angeordnet sowie ggf. physisch durch entsprechend massive Gehäuse oder dergleichen geschützt.

Erfindungsgemäß ist ein Speicher für die Daten der Aufnahmevorrichtung vorgesehen. Dieser Speicher speichert vorzugsweise sämtliche Daten vorzugsweise aller Aufnahmevorrichtungen über einen bestimmten Zeitraum. Es kann sich um einen analogen oder vorzugsweise digitalen Speicher handeln, der die entsprechenden Daten in digitalisierter Form speichert. Es kann sich bevorzugt bspw. um Speicherchips (solid state memory) handeln.

Ferner ist eine Übertragungsvorrichtung für Daten der Aufnahmevorrichtung und/oder aus dem Speicher ausgelesene Daten an die Bodenstation vorgesehen. Erfindungsgemäß nutzt diese Übertragungsvorrichtung für den Übertragungsvorgang wenigstens einen Kommunikationskanal der erfindungsgemäßen Anordnung. Die Übertragungsvorrichtung kann im Rahmen der Erfindung Daten einer oder mehrerer Aufnahmevorrichtungen in Echtzeit übertragen, sofern die Kapazität des verwendeten Kommunikationskanals dazu ausreicht. Bspw. kann über einen VHF-Sprechfunkkanal ein Überwachungsmikrofon von der Bodenstation in Echtzeit abgehört werden. Häufig wird jedoch die Kapazität des zur Verfügung stehenden Kommunikationskanals oder der Kommunikationskanäle nicht ausreichen, um sämtliche Daten sämtlicher Aufnahmevorrichtungen in Echtzeit an die Bodenstation zu übertragen. Im Rahmen der Erfindung ist daher vorgesehen, dass die Übertragungsvorrichtung wahlweise auch aus dem Speicher ausgelesene Daten an die Bodenstation übertragen kann. Die Bodenstation kann zu diesem Zweck vorteilhafterweise gezielt ferngesteuert den an Bord des Luftfahrzeugs befindlichen Speicher ansteuern und darin gespeicherte Daten auslesen. Geht bspw. aus der Echtzeitaudioüberwachung des Cockpits hervor, dass zu einem bestimmten Zeitpunkt ein besonderes Ereignis stattgefunden hat, kann die Bodenstation gezielt Videodaten dieses Zeitpunkts über den Kommunikationskanal abrufen.

Der besondere Vorteil der Erfindung liegt darin, dass der Aufbau einer besonderen Kommunikationsinfrastruktur für die Überwachungseinrichtung nicht erforderlich ist. Statt dessen nutzt man erfindungsgemäß die in jedem Flugzeug sowieso vorhandenen, in der Regel jedoch schmalbandigen Kommunikationseinrichtungen wie bspw. den VHF-Sprechfunk zusätzlich als Kommunikationskanäle für die Überwachungseinrichtung. Zwar ermöglichen diese sowieso vorhandenen Kommunikationskanäle häufig keine vollständige Echtzeitübertragung aller Überwachungsdaten, durch die Speicherung dieser Daten im bordseitigen Speicher und die Möglichkeit des gezielten Ansteuerns und Auslesens der Daten aus dem Speicher durch die Bodenstation ist es dem Air Traffic Controller im Rahmen der Erfindung dennoch möglich, sich auch durch nachträglichen Abruf gespeicherter Daten ein vollständiges Bild über die Lage an Bord zu verschaffen.

Das VHF-Band umfasst Frequenzen von 30 bis 300 MHz. Üblicherweise werden VHF-Verbindungen zwischen Luftfahrzeug und Bodenstation oder von Luftfahrzeugen untereinander amplitudenmoduliert, andere Modulationsarten, insbesondere Frequenz- oder Phasenmodulation, sind jedoch ebenfalls denkbar.

Bei dieser im Rahmen der Erfindung bevorzugten Steuerbarkeit der Auswahl der mittels der Übertragungsvorrichtung zu übertragenen Daten aus Daten der Aufnahmevorrichtung (bspw. Auswahl der Mikrofone oder Kameras) oder gespeicherten Daten ist es weiter bevorzugt, dass die Daten der Aufnahmevorrichtung im Speicher mit einer Kennung abgelegt werden, aus der Aufnahmezeit und/oder -ort hervorgehen. Die Auswahl aus dem Speicher zu übertragener Daten an die Bodenstation kann dann im Rahmen der Erfindung so erfolgen, dass die Bodenstation an das Luftfahrzeug eine Kennung sendet, die Aufnahmezeit und Aufnahmeort (bspw. Cockpitkamera) enthält. Mit Hilfe dieser Kennung werden dann die entsprechenden Daten aus dem Speicher ausgewählt, ausgelesen und über den Kommunikationskanal an die Bodenstation übertragen.

Der erfindungsgemäße Speicher weist vorzugsweise die mechanische und thermische Widerstandsfähigkeit eines Cockpit Voice Recorders oder sonstigen Flugdatenschreibers (Black Box) auf. Er ist vorzugsweise zur vollständigen Aufzeichnung der Daten aller Aufnahmevorrichtungen über einen Zeitraum von wenigstens 15 min, vorzugsweise wenigstens 30 min, weiter vorzugsweise wenigstens 1 h ausgebildet.

Ein Ausführungsbeispiel der Erfindung wird im folgenden anhand der Zeichnungen beschrieben. Darin zeigen:

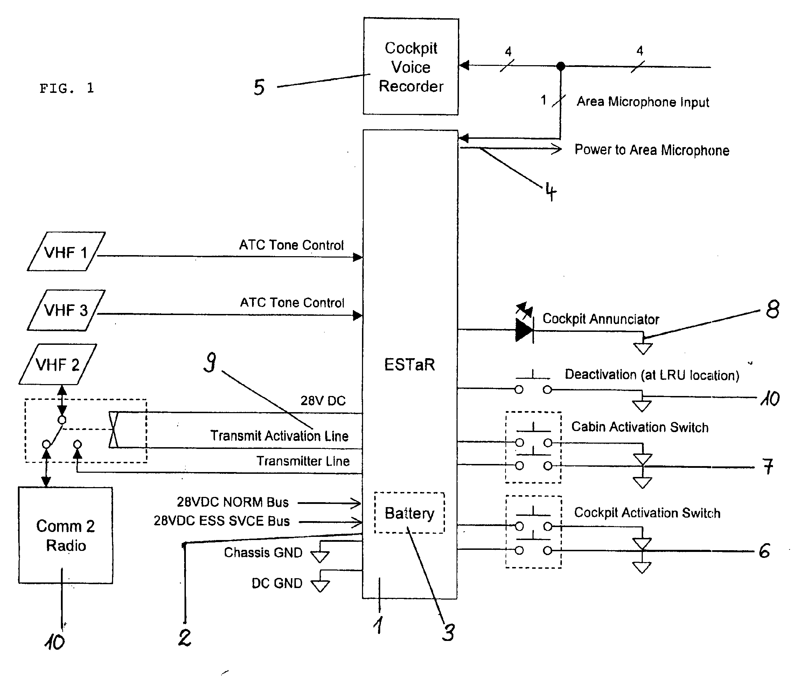

- Fig. 1: schematisch die bordseitige Kommunikations- und Überwachungseinrichtung der erfindungsgemäßen Anordnung;
- Fig. 2: schematisch ein Beispiel für die Aktivierung bzw. Steuerung des bordseitigen Teils der Anordnung durch eine Bodenstation.

Die bordseitige Zentraleinheit 1 enthält den Speicher für Daten der Audiodatenaufnahmevorrichtungen, Anschlüsse für entsprechende Aufnahmevorrichtungen, sowie für Energieversorgung, die Übertragungsvorrichtung zur Kommunikation mit der Bodenstation und sonstige Betätigungs- oder Anzeigevorrichtungen.

Die Zentraleinheit 1 besitzt die mechanische und thermische Widerstandsfähigkeit eines Cockpit-Voicerecorders, so dass darin gespeicherte Daten auch nach einem Flugzeugabsturz auslesbar erhalten bleiben. Sie wird bevorzugt in einem Bereich des Flugzeugs angeordnet, der während des Fluges nicht oder nur schwer zugänglich ist. Die Zentraleinheit 1 ist wie bei 2 angedeutet mit dem Bordnetz verbunden. Als Backup-Energieversorgung ist eine intern angeordnete Batterie 3 vorgesehen.

Bei 4 sind die Eingänge für Audio-, Video- und/oder Flugdatenaufnahmevorrichtungen angedeutet. In der Regel ist ein Anschluss für wenigstens ein Mikrofon vorgesehen, das im Cockpit angeordnet ist. Bei Bedarf kann ein solches Mikrofon sowohl an die Zentraleinheit 1 als auch an einen falkultativen zusätzlichen Cockpit-Voicerecorder 5 angeschlossen sein. Vorzugsweise sind Eingänge für zusätzliche Mikrofone vorgesehen, die beispielsweise in der Flugzeugkabine, im Frachtraum, in Funktionsräumen wie Galleys oder Toiletten oder dergleichen angeordnet sein können. Die Zentraleinheit 1 ist zur parallelen Aufzeichnung aller von den Mikrofonen gelieferten Schallinformationen eingerichtet.

Die vorhandenen Speichermittel sind vorzugsweise digitale Speicher wie zum Beispiel Speicherchips (solid state memory), die die Daten jedes Eingangskanals für einen Zeitraum von einer Stunde aufzeichnen können.

Im Cockpit sowie vorzugsweise in der Kabine unauffällig angeordnete und für die Besatzung leicht zu erreichende Schalter 6, 7 dienen der Aktivierung der Zentraleinheit. Eine vorzugsweise ebenfalls unauffällig angeordnete Signaleinrichtung 8 zeigt der Cockpitbesatzung die erfolgte Aktivierung an.

Die Zentraleinheit ist wie bei 9 angedeutet mit einem üblichen VHF-Funkgerät 10 verbunden. Vorzugsweise ist dieses Funkgerät 10 zum gleichzeitigen Senden und insbesondere Empfangen auf mehreren VHF-Kanälen eingerichtet, die in der Zeichnung mit den Bezeichnungen VHF 1, VHF 2 und VHF 3 angedeutet sind. Die Aktivierung der erfindungsgemäßen Anordnung von der Bodenstation aus erfolgt dann durch Senden eines später noch zu erläuternden Aktivierungssignals auf einem VHF-Kanal, der im Funkgerät 10 ständig auf Empfang geschaltet ist. Übliche VHF-Frequenzen zu diesem Zweck sind beispielsweise 121,5 oder 243 MHz. Eine bordseitige Deaktivierung der erfindungsgemäßen Anordnung kann nur bei am Boden stehendem Flugzeug über einen Schalter erfolgen, der am LRU(Line Replaceable Unit)-Rack angeordnet ist.

Im normalen Flugbetrieb ist die Zentraleinheit 1 im deaktivierten Zustand. Dies bedeutet, dass sie keinerlei Daten über die VHF-Verbindung des Funkgeräts 10 an die Bodenstation überträgt. In diesem deaktivierten Zustand kann die Zentraleinheit 1 sowie ggf. die an den Anschlüssen 4 angeschlossenen Audiodatenaufnahmevorrichtungen vollständig abgeschaltet sein, alternativ kann über die Anschlüsse 4 eine Aufzeichnung entsprechender Daten im internen Speicher der Zentraleinheit 1 erfolgen, ohne dass eine Übertragung von Daten zur Bodenstation erfolgt. In diesem Fall werden alte Daten im Speicher der Zentraleinheit 1 fortlaufend überschrieben, sobald die Speicherkapazität erschöpft wird. Beispielsweise werden dann fortlaufend entsprechende Audiodaten der vergangenen Stunde gespeichert. Dieser Deaktivierungszustand, bei dem dennoch eine interne Aufzeichnung der Daten erfolgt, hat den Vorteil, dass nach einer Aktivierung auch Ereignisse aus dem Zeitraum vor der Aktivierung abgefragt werden können. Beispielsweise kann die Bodenstation im Falle einer Flugzeugentführung sich Informationen darüber verschaffen, wo Flugzeugentführer ursprünglich gesessen haben und auf welchem Wege sie ins Cockpit gelangt sind.

Die Aktivierung der Zentraleinheit 1 erfolgt entweder über bereits beschriebene Schalter 6, 7 oder gesichert ferngesteuert von der Bodenstation über einen speziellen Aktivierungcode. Ein Empfänger des Funkgeräts 10 ist auf einem entsprechenden VHF-Kanal wie beispielsweise 121,5 oder 243 MHz ständig auf Empfang geschaltet. Wenn ein spezieller Aktivierungscode im Form eines Touch-Tones empfangen wird, wird dieser an die Zentraleinheit 1 geleitet und aktiviert diese.

Nach erfolgter Aktivierung belegt die Zentraleinheit 1 einen VHF-Kommunikationskanal des Funkgeräts 10 und nutzt diesen zur Übertragung von Daten an die Bodenstation. Sofern die Aktivierung entweder durch die Schalter 6, 7 erfolgte oder aber von der Bodenstation aus ohne nähere Spezifikation der zu übertragenden Signale, überträgt die Zentraleinheit 1 zunächst ein voreingestelltes Standardsignal, beispielsweise wird in Echtzeit der vom Cockpitmikrofon aufgenommene Schall übertragen.

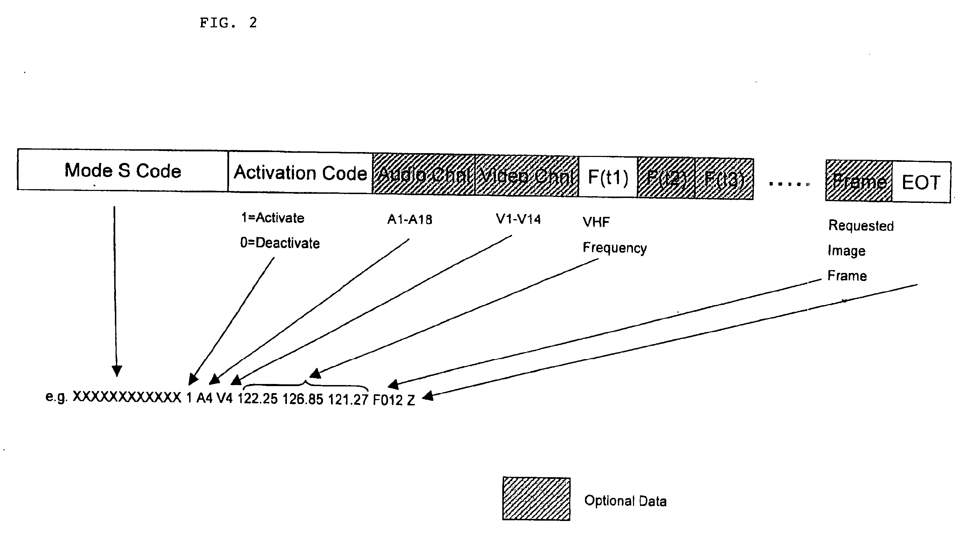

Die Bodenstation kann über einen anderen VHF-Kanal mittels sogenannter Touch-Tones die Zentraleinheit 1 gesichert fernsteuern. Fig. 2 zeigt ein Beispiel für einen aus verschiedenen Signalen zusammengesetzten Touch-Tone zur Fernsteuerung der Zentraleinheit 1. Zunächst wird ein sogenannter Mode-S-Code übertragen, der der Zentraleinheit 1 signalisiert, dass anschließend Steuercodes folgen. Mit dem Activation-Code wird die Zentraleinheit 1 vom inaktiven in den aktiven Zustand geschaltet. Umgekehrt kann sie auf diese Art und Weise wieder deaktiviert werden. Anschließend wird ein VHF-Kanal (in der Figur mit F(t1) bezeichnet) vorgegeben, über den die Verbindung zwischen Zentraleinheit und Bodenstation hergestellt werden soll. Ein EOT-Signal signalisiert das Ende der Befehlsfolge. Die genannten Bestandteile des Touch-Tones sind in der Zeichnung weiß unterlegt und sind zwingende Bestandteile einer jeden Befehlsfolge an die Zentraleinheit.

Zusätzliche fakultative Bestandteile einer solchen Befehlsfolge sind in der Zeichnung gestrichelt dargestellt. So kann im Anschluss an die Aktivierung der Zentraleinheit 1 gezielt ein bestimmter Audiokanal (eine Auswahl unter den zur Verfügung stehenden Mikrofonen) zur Übertragung ausgewählt werden. Ferner können zur Übertragung mehrere VHF-Frequenzen geschaltet werden, wenn das Funkgerät eine entsprechende Zahl von Kanälen zur Verfügung stellt. Die Daten der Aufnahmevorrichtungen werden im Speicher der Zentraleinheit 1 mit einer Kennung abgelegt, aus der Aufnahmezeit sowie Aufnahmeort hervorgehen. Die Bodenstation kann durch einen entsprechenden Befehl gezielt Informationen aus dem Speicher von einem bestimmten Ort des Flugzeugs zu einem bestimmten Zeitpunkt abrufen.
Im Rahmen der Erfindung ist es möglich, Daten innerhalb der Zentraleinheit 1 in Datenblöcke zu unterteilen und diese Blöcke simultan über mehrere VHF-Kanäle an die Bodenstation zu übertragen. Diese paketweise Parallel-übertragung erlaubt eine schnellere Übertragung großer Datensätze.

Über einen entsprechenden Touch-Tone kann die Zentraleinheit 1 gesichert ferngesteuert von der Bodenstation wieder deaktiviert werden. Eine bordseitige Deaktivierung ist nur bei am Boden stehendem Flugzeug mittels des am LRU-Rack angeordneten Schalters 10 möglich.

## Patentansprüche

1. Anordnung zur Audiokommunikation zwischen einer Bodenstation und einem Luftfahrzeug, mit wenigstens einem Kommunikationskanal, bei der eine Überwachungseinrichtung an Bord des Luftfahrzeugs mit folgenden Merkmalen vorgesehen ist:
a) wenigstens eine im Cockpit angeordnete Audiodatenaufnahmevorrichtung,
b) die Aufnahmevorrichtung ist ferngesteuert von der Bodenstation aus mittels eines über einen VHF-Kommunikationskanal übertragenen Touch-Tone-Signals aktivierbar,
c) die Aufnahmevorrichtung ist ausschließlich ferngesteuert von der Bodenstation und/oder von Bord des am Boden stehenden Luftfahrzeugs deaktivierbar,
d) einen Speicher für die Daten der Aufnahmevorrichtung,
e) eine Übertragungsvorrichtung für Daten der Aufnahmevorrichtung und/oder aus dem Speicher ausgelesene Daten an die Bodenstation,
f) die Übertragungsvorrichtung nutzt wenigstens einen VHF-Kommunikationskanal der Anordnung zur Audiokommunikation zwischen Bodenstation und Luftfahrzeug.

2. Anordnung nach Anspruch 1, **dadurch gekennzeichnet, dass** ein Touch-Tone-Signal für die Deaktivierung der Aufnahmevorrichtung vorgesehen ist.

3. Anordnung nach Anspruch 1 oder 2, **dadurch gekennzeichnet, dass** die Daten der Aufnahmevorrichtung im Speicher mit einer Kennung abgelegt werden, aus der Aufnahmezeit und/oder -ort hervorgehen.

4. Anordnung nach einem der Ansprüche 1 bis 3, **dadurch gekennzeichnet**, sie eine von der Bodenstation steuerbare Vorrichtung zur Auswahl der mittels der Übertragungseinrichtung zu übertragenden Daten aus den Daten der Aufnahmevorrichtung oder gespeicherten Daten aufweist.

5. Anordnung nach einem der Ansprüche 1 bis 4, **dadurch gekennzeichnet, dass** der Speicher die mechanische und thermische Widerstandsfähigkeit eines Cockpit Voice Recorders aufweist.

6. Anordnung nach einem der Ansprüche 1 bis 5, **dadurch gekennzeichnet, dass** der Speicher zur vollständigen Aufzeichnung der Daten aller Aufnahmevorrichtungen über einen Zeitraum von wenigstens 15 min, vorzugsweise wenigstens 30 min, weiter vorzugsweise wenigstens 1 h, ausgebildet ist.

## Claims

1. An assembly for audio communication between a base station and an aircraft, with at least one communication channel in which a monitoring device is provided on board the aircraft, having the following features:
a) at least one audio data recording device disposed in the cockpit,
b) the recording device can be activated remotely controlled from the base station by means of a touch-tone signal transmitted via a VHF communication channel,
c) the recording device can be deactivated exclusively remotely controlled from the base station and/or from on board the aircraft on the ground,
d) a memory for the data of the recording device,
e) a transmitting device for data of the recording device and/or data read from the memory to the base station,
f) the transmitting device uses at least one VHF communication channel of the assembly for audio communication between the base station and the aircraft.

2. An assembly according to Claim 1, **characterised in that** a touch-tone signal is provided for deactivating the recording device.

3. An assembly according to Claim 1 or 2,
**characterised in that** the data of the recording device are filed in the memory with an identifier from which the recording time and/or location are derived.

4. An assembly according to any one of Claims 1 to 3,
**characterised in that** it has a device, which can be controlled from the base station, for selecting the data to be transmitted by means of the transmitting device from the data of the recording device or stored data.

5. An assembly according to any one of Claims 1 to 4,
**characterised in that** the memory has the mechanical and thermal resistance of a cockpit voice recorder.

6. An assembly according to any one of Claims 1 to 5,
**characterised in that** the memory is designed for the complete recording of the data of all the recording devices over a period of at least 15 min., preferably at least 30 min., more preferably at least one 1 h.

## Revendications

1. Dispositif pour l'audiocommunication entre une station terrestre et un aéronef, comprenant au moins un canal de communication, sur lequel est prévu un dispositif de surveillance à bord de l'aéronef présentant les caractéristiques suivantes :
a) au moins un dispositif d'enregistrement audio disposé dans le cockpit,
b) le dispositif d'enregistrement peut être activé de façon télécommandée à partir de la station terrestre au moyen d'un signal Touch-Tone transmis par un canal de communication VHF,
c) le dispositif d'enregistrement peut être désactivé exclusivement de façon télécommandée à partir de la station terrestre et/ou du bord de l'aéronef disposé au sol,
d) une mémoire pour les données du dispositif d'enregistrement,
e) un dispositif de transmission pour des données du dispositif d'enregistrement et/ ou des données extraites de la mémoire à la station terrestre,
f) le dispositif de transmission utilise au moins un canal de communication VHF du dispositif pour la communication audio entre la station terrestre et l'aéronef.

2. Dispositif selon la revendication 1, **caractérisé en ce qu'**un signal Touch-Tone est prévu pour la désactivation du dispositif d'enregistrement.

3. Dispositif selon la revendication 1 ou 2, **caractérisé en ce que** les données du dispositif d'enregistrement sont déposées dans la mémoire avec un code qui fait apparaître l'heure et/ou le lieu d'enregistrement.

4. Dispositif selon l'une quelconque des revendications 1 à 3, **caractérisé en ce qu'**il présente un dispositif pouvant être commandé à partir de la station terrestre pour le choix des données à transmettre au moyen du dispositif de transmission à partir des données du dispositif d'enregistrement ou des données stockées.

5. Dispositif selon l'une quelconque des revendications 1 à 4, **caractérisé en ce que** la mémoire présente la capacité de résistance mécanique et thermique d'un Cockpit Voice Recorder.

6. Dispositif selon l'une quelconque des revendications 1 à 5, **caractérisé en ce que** la mémoire est conçue pour l'enregistrement complet des données de tous les dispositifs d'enregistrement sur une période d'au moins 15 minutes, de préférence d'au moins 30 minutes, et avec une préférence particulière d'au moins 1 heure.
